# EUROPÄISCHE PATENTANMELDUNG

(11) **EP 1 398 222 A2**
(43) Veröffentlichungstag der Anmeldung: **17.03.2004**
(21) Anmeldenummer: 03016168.1
(22) Anmeldetag: 16.07.2003
(51) Int. Cl.: B60R 19/18

(54) **Vorrichtung zum Schützen der Beine eines Fahrzeuginsassen**

(30) Priorität: 03.09.2002 DE 10240646
(71) Anmelder: Euromotive GmbH & Co. KG, 5282 Ranshofen (AT)
(72) Erfinder: Garnweidner, Peter, 5112 Lamprechtshausen (AT); Moke, Manfred, 4963 St. Peter (AT)
(74) Vertreter: Pohlmann, Eckart, Dipl.-Phys.

(57) **Zusammenfassung**

Vorrichtung zum Schutz der Beine eines Fahrzeuginsassen bei einem Frontalaufprall des Fahrzeugs. Im Beinbereich sind in Längsrichtung des Fahrzeugs an einem Zentralrohr 1 Stülpbleche 2 angeordnet, die an ihrem freien Ende einen Lastverteiler 3 tragen, der die Stoßenergie der Beine der Fahrzeuginsassen beim Frontalaufprall aufnimmt. Der Lastverteiler 3 überträgt die anliegende Stoßenergie auf die Stülpbleche 2, die dann abrollen und dadurch Energie abbauen.

## Beschreibung

Die Erfindung betrifft eine Vorrichtung zum Schützen der Beine eines Fahrzeuginsassen bei einem Frontalaufprall des Fahrzeugs.

Bei einem Frontalaufprall eines Fahrzeugs, beispielsweise eines Kraftfahrzeugs, ist es zum Schutz der Fahrzeuginsassen notwendig, eine Vorrichtung vorzusehen, die die Stoßenergie der Knie und der Beine aufnimmt.

Hierzu ist es bekannt, zwischen einem Zentralrahmenteil oder Zentralrohr, das in Querrichtung im Fahrzeug verläuft und dem Knie- und Beinbereich der Fahrzeuginsassen, insbesondere der Fahrzeuginsassen auf dem Vordersitz, Verformungselemente aus Stahl, Aluminium oder Kunststoffschäumen vorzusehen. Diese sind so angeordnet, dass sie sich unmittelbar vor den Knien eines Fahrzeuginsassen befinden, wenn dieser seine ideale Sitzposition eingenommen hat.

Aus der DE 10 060 636 A1 ist ein derartiges Verformungselement bekannt, das aus einem wabenförmigen Hohlkörper mit einem Zugband besteht.

Zur Überprüfung der Fahrzeugsicherheit ist in den entsprechenden fahrzeugtechnischen Vorschriften die Sitzposition des Fahrzeuginsassen zwar fest vorgeschrieben, tatsächlich nimmt jedoch jede Person eine andere Sitzposition ein, so dass die Position der Knie in dem zur Verfügung stehenden Fußfreiraum in Querrichtung des Fahrzeugs variiert. Aufgrund der unterschiedlichen Körpergrößen der Fahrzeuginsassen variiert diese Position auch in Richtung der Höhe. Angewinkelte oder gestreckte Beine führen darüber hinaus zu verschiedenen Bewegungsrichtungen der Knie bei einem Fahrzeugaufprall. Auswertungen von Crashtests haben ergeben, dass sich die Kniebahn am Anfang als nahezu kreisförmig um das Sprunggelenk herum beschreiben lässt.

Bei einem Aufprall besteht nun das Problem, dass mit steigender Intrusion der Beine und der Knie der Fahrzeuginsassen in die Instrumententafel auf der Fahrerseite, bzw. den Handschuhkasten auf der Beifahrerseite immer mehr Bauteile verformt werden, wodurch zusätzliche Kräfte aufgebaut werden.

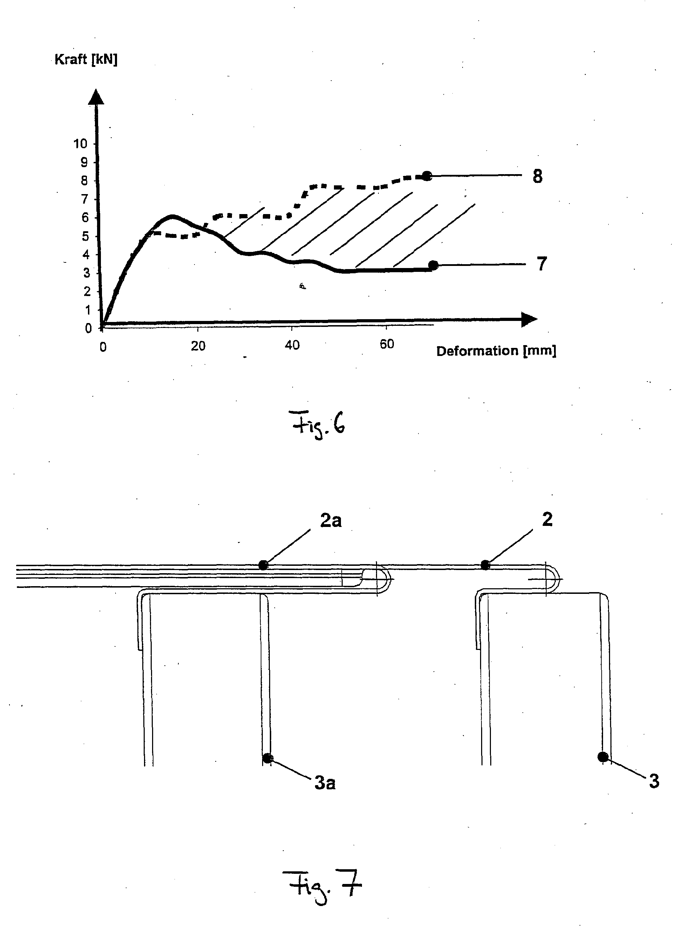

Wie es in Fig. 6 der zugehörigen Zeichnung dargestellt ist, ergibt sich jedoch bei der Verwendung bekannter Verformungselemente in Wabenform ein Kraftverlauf, der daraus resultiert, dass die bekannten Verformungselemente wie hintereinander angeordnete Druckfedern arbeiten. Dadurch ergeben sich im Kraftverlauf zwar unterschiedliche Kraftniveaus, die jedoch immer ansteigend sind. Um aber die biomechanischen Grenzwerte bei einem Aufprall dann nicht zu überschreiten, wenn immer mehr Bauteile verformt werden, ist eine Reduktion des Kraftniveaus im Kraftverlauf der Verformungselemente erwünscht.

Da die bekannten Verformungselemente eine vorgegebene Verformungsrichtung haben, können bei Abweichungen der Belastungsrichtung von dieser vorgegebenen Verformungsrichtung durch eine Biegung der Verformungselemente in Querrichtung und in Richtung der Höhe Verminderungen der Schutzwirkung auftreten.

Die bekannten Verformungselemente sind darüber hinaus insofern nachteilig, als sie aus Strangpressprofilen bestehen, die mit hohen Kosten verbunden sind, und ihre Anordnung im Kniebereich den für andere Bauteile, beispielsweise das Handschuhfach auf der Beifahrerseite oder die Fahrzeugelektronik auf der Fahrerseite, zur Verfügung stehenden Bauraum stark einschränkt.

Die der Erfindung zugrunde liegende Aufgabe besteht daher darin, eine Vorrichtung der eingangs genannten Art zu schaffen, die so ausgebildet ist, dass sich ein Kraftverlauf mit abnehmendem Kraftniveau ergibt.

Die erfindungsgemäße Vorrichtung soll insbesondere so ausgebildet sein, dass sie darüber hinaus auftretende Stoßkräfte und Stoßenergien auch dann abbauen kann, wenn die Belastungsrichtung variiert.

Die der Erfindung zugrunde liegende Aufgabe besteht dem gegenüber darin, eine Vorrichtung der eingangs genannten Art zu schaffen, die so ausgebildet ist, dass sie die auftretenden Stoßkräfte und Stoßenergien auch dann abbauen kann, wenn die Belastungsrichtung variiert.

Diese Aufgabe wird gemäß der Erfindung durch im Beinbereich in Längsrichtung des Fahrzeugs an einem Zentralrahmenteil angeordnete Stülpbleche gelöst, die an ihren freien Enden Lastverteiler tragen, die die Stoßenergie der Beine des Fahrzeuginsassen bei einem Frontalaufprall aufnehmen.

Besonders bevorzugte Ausgestaltungen und Weiterbildungen der erfindungsgemäßen Vorrichtung sind Gegenstand der Patentansprüche 2 bis 5.

Im Folgenden wird anhand der zugehörigen Zeichnung ein besonders bevorzugtes Ausführungsbeispiel der Erfindung näher beschrieben. Es zeigen:
Figuren 1A und 1B in perspektivischen Ansichten das Ausführungsbeispiel der erfindungsgemäßen Vorrichtung, in Fig. 1A vor einem Frontalaufprall und in Fig. 1B nach einem Frontalaufprall,
Fig. 2 in einer perspektivischen Ansicht die Position der Stülpbleche und des Lastverteilers vor und nach einem Frontalaufprall im Einzelnen,
Fig. 3 in einer schematischen Ansicht die Beziehung zwischen dem Ausführungsbeispiel der erfindungsgemäßen Vorrichtung und den Beinen und Knien eines Fahrzeuginsassen,
Fig. 4 eine Schnittansicht der erfindungsgemäßen Vorrichtung in der XY-Ebene,
Fig. 5 eine Seitenansicht eines Stülpbleches in Einzelnen,
Fig. 6 den Kraftverlauf bei einem Ausführungsbeispiel der erfindungsgemäßen Vorrichtung sowie bei einem Ausführungsbeispiel der bekannten Verformungselemente in Wabenform und
Fig. 7 in einer Draufsicht die Funktionsweise des Ausführungsbeispiels der erfindungsgemäßen Vorrichtung.

Bei dem in der Zeichnung dargestellten Ausführungsbeispiel der erfindungsgemäßen Vorrichtung zum Schutz der Beine eines Fahrzeuginsassen bei einem Frontalaufprall des Fahrzeugs sind Stülpbleche 2 in Längsrichtung, d.h. in der XZ-Ebene des Fahrzeugs, an einem Zentralrahmenteil oder Zentralrohr 1 angebracht, die an ihrem freien Ende einen Lastverteiler 3 tragen. Dieser Lastverteiler 3 ist so angeordnet, dass bei einem Frontalaufprall des Fahrzeugs die Fahrzeuginsassen mit ihren Beinen bzw. Knien auf den Lastverteiler aufprallen, so dass dieser die Stoßenergie der Beine des Fahrzeuginsassen aufnimmt.

Wie es im Einzelnen in Fig. 7 dargestellt ist, sind die Stülpbleche 2 und der Lastverteiler 3 so ausgebildet, dass der Lastverteiler 3 an einem umgebördelten oder umgestülpten Teil der Stülpbleche 2 angebracht ist und bei einem Aufprall in die Position 3a übergeht, in der das Stülpblech 2 weiter abgerollt ist, wodurch entsprechende Energie abgebaut wird. Die Endlage des Stülpblechs ist mit 2a bezeichnet. Diese zeichnet sich dadurch aus, dass ein größerer Teil des Stülpblechs 2 umgebördelt ist.

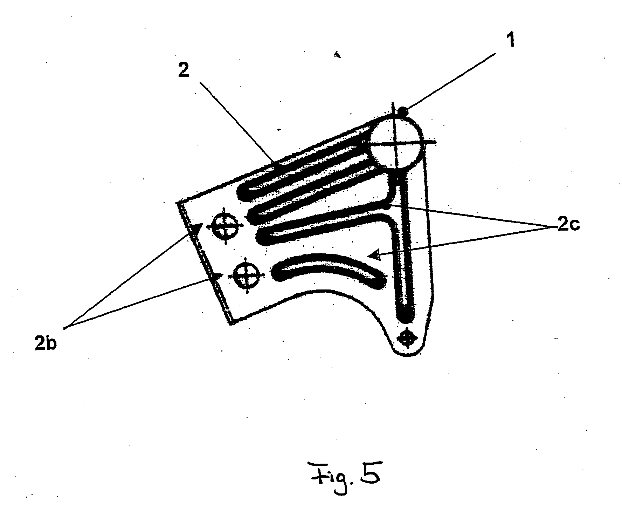

Die Anordnung und Ausbildung der Stülpbleche 2 und des Lastverteilers 3 auf der Beifahrerseite vor und nach einem Frontalaufprall sind im Einzelnen in Figur 2 dargestellt.

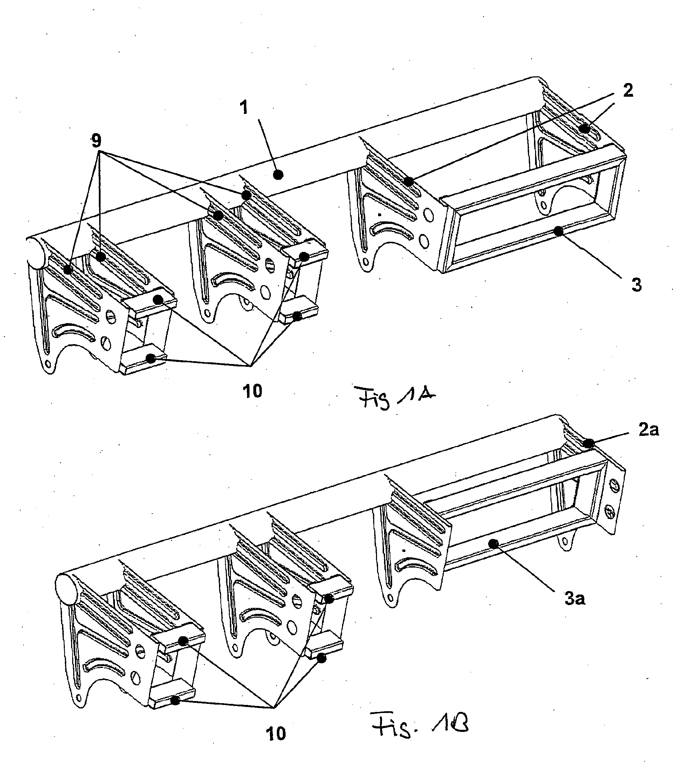

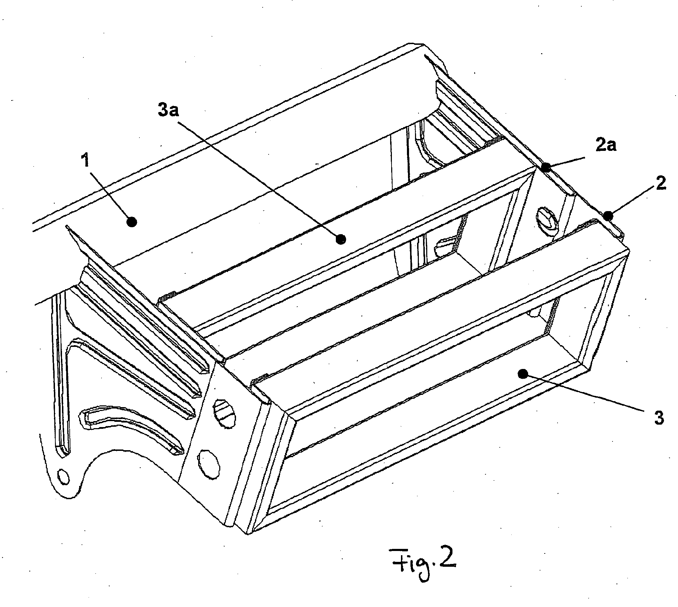

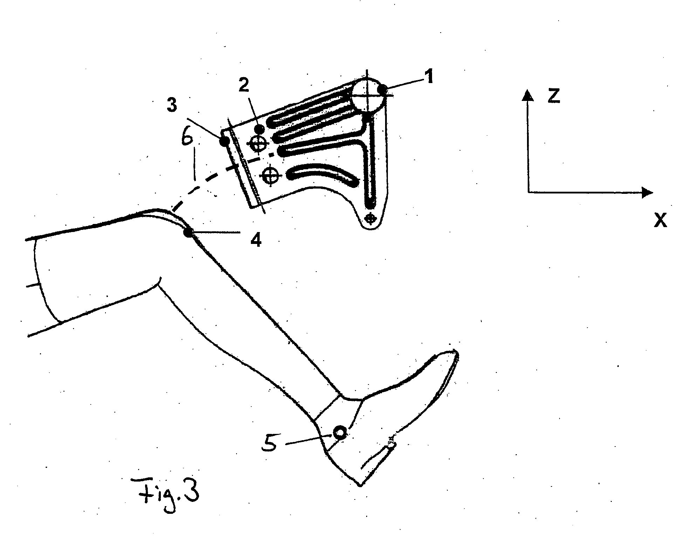

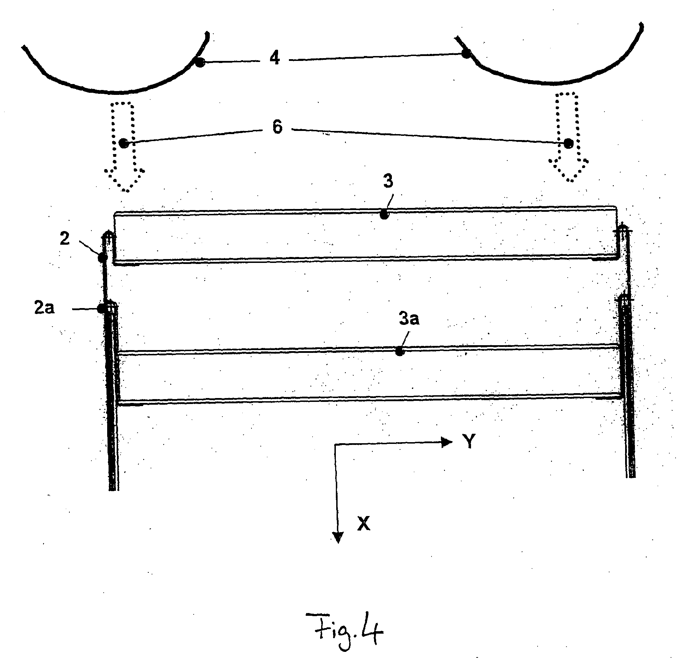

In Figuren 1A und 1B sind Stülpbleche 2 und Lastverteiler 3 auf der Beifahrerseite und Stülpbleche 9 und Lastverteiler 10 auf der Fahrerseite jeweils gezeigt. In Fig. 1A ist der unverformte Zustand dargestellt, während Fig. 1B auf der Beifahrerseite den verformten Zustand zeigt, in dem die Stülpbleche und die Lastverteiler die Positionen 2a und 3a eingenommen haben.

Dies ist im Einzelnen in Fig. 2 dargestellt.

In der Praxis haben die Stülpbleche 2 eine Höhe von ca. 100mm und ist das Flächenträgheitsmoment um die X-Achse in Fig. 3 sehr groß. Die über die Länge des Stülpbleches in dieser Achsenrichtung verlaufende Umbördelung ist sehr steif und steht normal auf dem Blechbeschnitt. Bei einer Abweichung der Stoßrichtung in der XZ-Ebene von Fig. 3 sind die Auswirkungen daher vernachlässigbar, da allerhöchstens die Verformungsrichtung leicht schräg verlaufen könnte. Darüber hinaus lässt sich bei der erfindungsgemäßen Ausbildung der karrosserieseitige Anbindungspunkt der Stülpbleche wesentlich näher am Lastverteiler anbringen, als es bei bekannten Anordnungen der Fall ist, da dieser einerseits seitlich angeordnet ist, und überdies eine Längenübersetzung insofern stattfindet, als die Verschiebung des Lastverteilers in X-Richtung bei einem Aufprall in einem Verhältnis von 2:1 zur Verschiebung der Umbördelungskante des Stülpbleches steht.

Üblicherweise wird die gesamte in Fig. 1A und 1B dargestellte Baugruppe von der Rohkarosserie, d.h. den Pfosten A, nämlich den Türpfosten vorne rechts und links begrenzt und sind in der Mitte die Blechteile nach unten verlängert und dort mit dem Fahrzeugtunnel verschraubt. Diese Verschraubung mit dem Fahrzeugtunnel ist bei heutigen Fahrzeugen üblich, um die Eigenfrequenz des Querträgers zu erhöhen und stellt daher keinen zusätzlichen Aufwand dar. Bei einer Abweichung der Stoßrichtung in der XY-Ebene in Fig. 4, d.h. schräg nach aussen oder nach innen, ist daher keine Auswirkung auf das Stülp- oder Umbördelungsverhalten der Stülpbleche zu befürchten.

Wie es in Fig. 3 dargestellt ist, bewegen sich die Knie und Beine eines Fahrzeuginsassen bei einem Frontalaufprall längs der gestrichelt dargestellten Kniebahnkurve 6 kreisförmig um das Sprunggelenk 5 als Drehpunkt in Richtung auf den Lastverteiler 3. Bei der anschließenden Verformung der Stülpbleche 2, bei der die Stülpbleche abrollen und Energie abbauen, ergibt sich der Kraftverlauf 7, der in Fig. 6 dargestellt ist. Dieser Verlauf zeigt, dass bei der erfindungsgemäßen Vorrichtung eine Reduktion des Kraftniveaus möglich ist, die bei der Verwendung bekannter Verformungselemente mit dem Kraftverlauf 8 nicht möglich ist.

Wie es im Einzelnen in Fig. 5 dargestellt ist, können in den Stülpblechen 2 Sicken 2c oder Durchbrüche 2b vorgesehen sein, durch die das Kraftniveau gezielt erhöht bzw. reduziert werden kann.

Die Verwendung von Stülpblechen mit daran angebrachten Lastverteilern hat den weiteren Vorteil, dass auch andere Bauteile an den Stülpblechen 2 fixiert werden können, so dass die Stülpbleche 2 nicht unbedingt zusätzliche Bauteile sein müssen, sondern die Funktion von üblichen Halte- und Anbindungsblechen mit übernehmen können. Es ist auch möglich, beispielsweise die Tunnelstütze, die zwischen dem Zentralrohr und dem Tunnel verläuft, als Stülpblech auszuführen. Der Lastverteiler 3 ist vorzugsweise rahmenförmig ausgebildet, so dass er die auftretenden Kräfte direkt auf die Stülpbleche 2 weiterleitet.

Der Einsatz von Stülpblechen 2 führt schließlich auch dazu, dass der Bauraum im Beinbereich unwesentlich reduziert wird, so dass beispielsweise auf der Beifahrerseite die volle Handschuhfachgröße erhalten bleiben kann.

## Patentansprüche

1. Vorrichtung zum Schutz der Beine eines Fahrzeuginsassen bei einem Frontalaufprall eines Fahrzeugs, **gekennzeichnet durch** im Beinbereich in Längsrichtung des Fahrzeugs an einem Zentralrahmenteil (1) angebrachte Stülpbleche (2, 9), die an ihren freien Enden einen Lastverteiler (3, 10) tragen, der die Stoßenergie der Beine der Fahrzeuginsassen beim Frontalaufprall aufnimmt.

2. Vorrichtung nach Anspruch 1, **dadurch gekennzeichnet, dass** in den Stülpblechen (2, 9) Versteifungssicken (2c) vorgesehen sind.

3. Vorrichtung nach Anspruch 1 oder 2, **dadurch gekennzeichnet, dass** in den Stülpblechen (2, 9) Schwächungen (2b) vorgesehen sind.

4. Vorrichtung nach einem der vorhergehenden Ansprüche, **dadurch gekennzeichnet, dass** die Tunnelstütze zwischen dem Zentralrohr und dem Tunnel eines Kraftfahrzeugs als Stülpblech ausgebildet ist.

5. Vorrichtung nach einem der vorhergehenden Ansprüche, **dadurch gekennzeichnet, dass** der Lastverteiler (3) rahmenförmig ausgebildet ist.
